# EUROPEAN PATENT APPLICATION

(11) **EP 4 613 716 A1**
(43) Date of publication of application: **10.09.2025**
(21) Application number: 23806028.9
(22) Date of filing: 30.10.2023
(51) Int. Cl.: C02F 1/467, C02F 103/42, C02F 1/461

(54) **SALT CHLORINATOR AND METHOD FOR CLEANING A SALT CHLORINATOR WITHOUT POLARITY REVERSAL**

(30) Priority: 31.10.2022 ES 202230944
(71) Applicant: I.D. Electroquimica, S.L., 03114 Alicante (ES)
(72) Inventor: SANCHEZ CANO, Gaspar, 03114 ALICANTE (ES); CODINA RIPOLL, Guillermo, 03114 ALICANTE (ES); PEREZ MALLOL, Jose Ramón, 03114 ALICANTE (ES)
(74) Representative: Herrero & Asociados, S.L.
(86) International application number: PCT/ES2023/070638
(87) International publication number: WO 2024/094909

(57) **Abstract**

The present invention refers to both a cleaning method of a salt chlorinator and a salt chlorinator of the type used in swimming pools that has means to eliminate the formation of lime deposits on its electrodes without having to resort to polarity reversal thereof and comprising a chamber (1) that defines an interior space wherein a set of electrodes (2) are housed, a water inlet to the chamber (1'), a water outlet from the chamber (1"), a retention system (15) for the water inside the chamber (1), a stirring device (16) to remove the water from inside the chamber (1), an injection point (12) to inject a pH minus acid into the interior of the chamber (1) and a pH meter (13) to measure the pH of the water.

## Description

### Object of the invention

The present invention refers, as its name indicates, to an electrolytic chlorinator of the type used in swimming pools for the disinfection of basin water. More specifically, these chlorinators, which are also called "salt chlorinators", are responsible for generating chlorine from common salt to keep the water from the swimming pool in optimal conditions for use.

More specifically, the chlorinator of the invention has means to eliminate the formation of lime deposits (Ca/Mg carbonates/hydroxides) on its electrodes without having to resort to polarity reversal thereof.

Likewise, the invention also refers to a cleaning method of a salt chlorinator to eliminate lime deposits that allows, in an economical, efficient and autonomous manner, optimal operation and maintenance thereof, reducing the need for human intervention to a minimum.

### Background of the invention

It is known that in the electrochemical industry chlorine can be generated from the electrolysis of chloride salts (called salt chlorination). This process is being widely used in many industrial processes and varied technical fields such as waste treatment, healthcare, agriculture, etc.

In recent years, one of the fields in which salt chlorination is increasingly used is in the disinfection/treatment of swimming water from the swimming pool, where it has significant advantages over the old techniques of direct dosing of chlorine into the water (chlorine liquid or solid), both in terms of safety in handling, water savings and water quality due to the added anodic oxidation of organic matter, as well as the destruction of chloramines in the cathode.

Specifically, salt chlorinators of the type to which the invention relates include an electrolysis cell or electrolytic cell to electrolyze dissolved chloride salts in water. The cathode/anode reactions that occur in a salt chlorinator (electrolysis of chloride salts in a chamber without separation) are the following:
At the cathode or negative pole, hydrogen gas and hydroxide are produced, giving the cathode a high pH on the surface, which is responsible for the Ca/Mg carbonate/hydroxide deposit ("calcareous" scale) that ends up blocking the flow path between the cathode-anode of the cell, which causes low efficiency in chlorine production, as well as the deterioration of the electrodes and makes their frequent cleaning necessary. Starting from the following:

2 H₂O + 2 e⁻ → H₂ + 2 OH⁻

Water → Hydrogen (gas) + Hydroxyl ions

On the other hand, at the anode or positive pole there are two competitive reactions that occur at the same time: the electrolysis of chloride to give chlorine and that of water to give oxygen gas and protons giving an acidic character to the surface (as it is the acidic anode in the case of polarity reversal the electrode is cleaned of calcifications by acidifying and dissolving the carbonates/hydroxides of Ca/Mg). Starting from the following:

2 H₂O → O₂ + 4 H⁺+ 4 e⁻

Water → Oxygen (gas) + protons

2 NaCl → Cl2 + 2 Na+ + 2 e-

Common salt → Chlorine + Sodium ions

Within the electrolysis chambers without physical separation between anode and cathode, the formation of hypochlorous/hypochlorite will take place depending on the pH of the medium. This has disinfectant properties, as well as oxidants (organic matter mineralization). Correct water treatment requires not only eliminating pathogens and preventing person-to-person infections (disinfected water and disinfectant with residual effect) but also the ability to "destroy" organic matter (ideally oxidation to CO₂ and H₂O). Starting from the following:

Cl₂ + OH⁻ → HClO + Cl⁻

Chlorine + hydroxyl ions → Hypochlorous acid + chlorides

Additionally, electrolysis represents a plus in the treatment by also carrying out in parallel anodic oxidation of organic matter (extra oxidation/mineralization) and cathodic reduction of chloramines (harmful byproduct of free chlorine with organic nitrogen from the contamination of bathers, mainly by sweat, urine, sun creams, etc.). Chloramines are regulated to a maximum level of 0.6 mg/L, which is often a challenge in busy public pools.

To prevent the collapse of the cathode-anode channel due to scale formation and growth in the past, this problem was solved by periodically cleaning the cell with the help of a pH minus acid, also known as chemical cleaning, which required consumers to disassemble the electrodes to place them in a container with said acid. Another known cleaning method, described in document WO201132212, provided a mechanical solution to the problem of removing scale from the cathode. That is, the scale was physically scraped off the surface of the cathode.

Both methods, however, therefore required the direct intervention of the user and, in addition to being laborious and complex, they could even entail some risk or physically damage the electrode, which obviously generally generated rejection and were not acceptable.

Thus, as an alternative to these systems, others emerged in which said chemical cleaning was automated, providing means for it to occur within the electrolytic chamber of the chlorinator, without the need to dismantle the electrodes or perform any manual cleaning operation. To do this, the flow of water inside the electrolytic chamber was stopped, its outlets were closed to isolate the liquid inside, and a certain volume of pH minus acid was supplied inside, then shaking the interior for a certain time in order to put the cleaning agent or pH minus in contact with the electrodes. Once the process was completed, the outlets were opened and the water flow was put back into operation, returning the acidic water mixture, including the dissolved calcium, to the swimming pool, which was not a problem due to the small volume it represented compared to the content in the basin. An example of this method can be found in document WO201085847.

However, although this method solved the problems of manual handling by users and somewhat automated the electrode cleaning process, it nevertheless suffered from important drawbacks. Firstly, that the cleaning process required an exclusively dedicated control system, expensive and of a certain volume, which on the one hand increased the cost of the whole and, on the other hand, made it difficult to use in already existing installations, since the entry of the cleaning agent took place in a specific opening in the reactor lid. That is to say, it required agitation through an auxiliary circuit formed by by-pass valves and recirculation with a pump, only acceptable in industrial chlorinators for public swimming pools, resulting in a cumbersome, expensive installation that also involved handling the acid to fill tanks or reservoirs with the risk already described.

Secondly, the stirring system used by connecting the electrodes without flow to generate Hydrogen/Oxygen bubbles that move the water in the chamber is a slow and well-known process of low efficiency. Specifically, the mixture of H₂/O₂ gas generated in unison at the cathode/anode, in addition to being ineffective (poor agitation), forms a volume of explosive H₂/O₂ mixture that can be dangerous if electrolysis is maintained for many minutes because there is no recirculation and it accumulates a pressurized gas bag.

Last but not least, the aforementioned cleaning agent or pH minus supply control system described in said document describes a cleaning cycle consisting of supplying a fixed amount of pH minus, shaking the interior of the chamber and resting alternately also for a fixed time, without said times, neither of adding pH minus nor of stirring nor of cleaning, obeying any parameter related to the amount of lime deposits accumulated on the electrodes. That is, it is a method that applies a general cleaning method without evaluating any external parameters such as water hardness, temperature, type and size of electrodes, etc. Therefore, the efficiency of this method is clearly questionable since the indicated times are not useful for the vast majority of particular situations and conditions. Finally, following this system there is no certainty when it comes to knowing whether or not the treatment has been effective and, consequently, insufficient, which means having to manually adjust the cleaning setpoints on a continuous basis.

In view of these drawbacks, in recent years the alternative technique of polarity reversal in the electrodes, also called electrodic self-cleaning, has been used, which basically consists of subjecting the electrodes to a cyclic polarity reversal, alternating their use as cathodes and as anodes. In this way, the deposit of calcium salts that are deposited on the surface of an electrode under cathodic operation (basic surface pH "NaOH" → scale), dissolves during subsequent operation as an anode (acidic surface pH "HCl" → scale cleaning), when the environment reaction tends to be acidified:

HNaCO₃ + Cl₂Ca + *NaOH* → CaCO₃ + H₂O + 2NaCl: scaling on the cathode

CO₃Ca + *2HCl* → H₂CO₃ + Cl₂Ca: anode cleaning

However, on the one hand, this system is not perfect since it does not solve well the dissolution of scale on the edges of the electrodes, typically 1-mm sheets, and even worse when the electrode does not have an activation coating (oxides of ruthenium, iridium, etc.), such as in the area of the edges, sharp edges or areas where the cathode - anode contact is welded. This means that in practice there are areas of "poor cleaning" that require, after a certain time, manual chemical cleaning with pH minus. These areas are the so-called "non-self-cleaning" areas.

On the other hand, the polarity reversal or electrodic self-cleaning system also presents another even greater drawback. Specifically, polarity reversal operation on activated Ti electrodes implies a shorter operational lifetime compared to an electrode without polarity reversal (fixed polarity). Assuming lifetimes 2 or 3 times shorter and, therefore, resulting in higher cost electrodes (approximately double the cost of an electrode with fixed polarity for the same number of working hours). Added to this is the extremely bullish situation in the raw materials markets, such as the metals used in the activation of titanium (Ru, Ir, Pt, etc.), which has meant doubling or even tripling the cost in the last years.

To these methods is also added as a partial solution, which does not solve the problem of calcification but slightly reduces it, the one described in European Patent Application No. 12840325.0 of this same applicant, where to achieve said "minimization" of lime deposits, places the injection of the pH minus used to control the pH of the water in the basin in a lower position of the electrolytic chamber in such a way that it runs along the electrodes along their entire length when the water is circulating. However, said contribution of pH minus, on the one hand, is carried out only punctually to correct the pH of the water in the basin, which is why it is insufficient for cleaning the deposits and, on the other, its passage through the electrodes is produces at a certain speed, which prevents it from acting effectively on them.

### Description of the invention

The present invention proposes both a new salt chlorinator and a cleaning method that solve the aforementioned drawbacks of the state of the art, especially the high cost of the electrodes in the polarity reversal option and the ineffectiveness of the non-self-cleaning areas that require of some manual cleaning during the swimming pool season, especially in hard water.

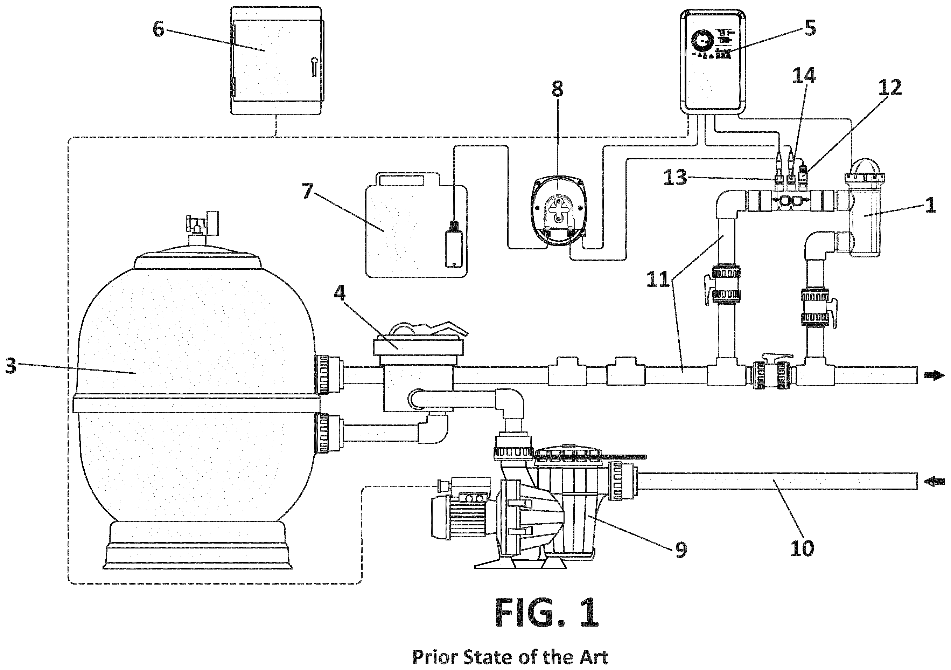

As is known from Figure 1, salt chlorinators are located within the water from the swimming pool treatment circuit, generally located in a room or compartment in which the rest of the elements necessary for maintenance are also located, such as the filter, the multi-way selector valve associated with said filter, the control electronics, etc. More specifically, the usual thing is that the water from the swimming pool leaves the basin through skimmers, dragging with it dirt and large particles such as leaves, papers, insects, etc., which remain in the basket or filter of said skimmer, the water then flowing through a pipe or channel with the help of a pump until, passing through the multi-way valve, it reaches a sand filter, where the filtering of small particles and dirt is carried out, then passing again through the multi-way valve to a conduit that enters the chlorinator and where, once treated, it is taken through another outlet conduit back to the swimming pool basin, closing the cleaning and disinfection cycle.

Thus, the salt chlorination operation and consequently the electrolysis, occurs constantly and continuously within the chlorinator as long as there is a flow of water inside, said flow having a speed that allows, on the one hand, an appropriate evacuation of the Hydrogen/Oxygen gases produced by electrolysis and, on the other, the generation of the concentrations of active chlorine necessary for the treatment of the water, which, as mentioned, is returned to the basin.

On the other hand, as is also known, the electrolysis carried out in salt chlorination processes for the disinfection of water from the swimming pool results in an increase in pH that must be regulated, with the typical optimal values for disinfection and treatment being located between 7.0 and 7.8. Thus, to ensure that the water in the basin remains at its pH values within these limits, it is necessary both to measure the value and to continuously add a pH minus acid, generally formed by hydrochloric or sulfuric acid.

That is to say, water from the swimming pool maintenance facilities based on the use of electrolysis for water disinfection and that do not resort to the technique of polarity reversal of the electrodes require two different inputs of pH minus acid, since on the one hand, they need to compensate for the increase in the pH of the water in the basin due to electrolysis and, on the other hand, avoid the formation of lime deposits on their electrodes.

This is because, as already explained, the amount of pH minus acid provided to control the pH of the water in the swimming pool basin is totally insufficient to clean the lime deposits from the electrodes due, both to the fact that the amount provided to this control is very small because, due to the speed of passage of the water flow through said electrodes, the acid is not allowed to act on the lime deposits long enough for them to be eliminated.

For this reason, in the type of installations such as the one described in this invention it is necessary that the cleaning of the electrodes be carried out when there is no flow, taking advantage, for example, of the inactive periods of the swimming pool at night, so that it can be closed or isolate the chlorinator to be able to supply a sufficient amount of pH minus acid and for it to remain inside said chlorinator acting on them for the necessary time.

Once this cleaning has been carried out, which will last a certain time depending on the amount of deposits, which in turn is a consequence of the hardness of the water, the temperature, the characteristics of the electrodes, etc., the chlorinator will open again and the water contained inside, which will have dissolved the salts and the unconsumed pH minus acid, will be returned to the circuit and, therefore, to the swimming pool, where neither the amount of said salts nor said pH acid minus will significantly affect the values of the water contained in the basin due to the difference in volume between it and the chlorinator, which in the case of residential pools is usually above 15,000 liters in the basin and, in the case of the chlorinator, of the order of only one liter.

However, unlike the state of the art described, both the chlorinator and the method included in the present invention allow the aforementioned tasks of cleaning the lime deposits on the electrodes to be carried out in an optimal way in terms of efficiency, automation, speed and comfort for the user while, thanks to it, the high cost of this type of device is reduced by not being based on the technique of polarity reversal of the electrodes, which, as seen previously, has recently been weighed down in economic terms by the high price of the noble metals that form the activated Ti (Ru, Ir, Pt, etc.) and its high content required per cm².

On the other hand, the chlorinator of the present invention has the added advantage that the system through which the pH minus acid is injected to clean the lime deposits deposited on the electrodes, is the same as the one used to dose the water from the swimming pool in order to regulate its pH (place it at pH values between 7 and 7.8). In other words, the same means used to maintain the pH of the swimming pool at the appropriate values (pH between 7 and 7.8) is used to carry out chemical cleaning of electrodes.

Therefore, contrary to the state of the art where a different system is necessary for the injection of the pH minus acid to control the pH of the water from the swimming pool and for cleaning the chlorinator, the present invention allows this double mode of contribution of pH minus acid dosing is carried out through the same elements, with consequent cost savings and structural and functional simplicity.

For it, the salt chlorinator of the invention comprises:
- A chamber that defines an interior space for the treatment of water from the swimming pool by salt chlorination;
- A set of electrodes that, when connected to a direct current (DC) source, are susceptible to electrolyze chloride salts dissolved in water;
- A water inlet to the chamber;
- A water outlet from the chamber;
- A water retention system inside the chamber;
- At least one stirring device to remove water from inside the chamber;
- At least one water pH sensor or meter; and
- At least one pH minus acid injection point inside the chamber;

Where, as an essential part of the invention, the water pH meter is located within the space defined by the chamber (1) of the chlorinator and the water retention system (15) inside.

That is, the pH meter is located inside the chlorinator chamber when the retention system operates or, in other words, it is located in such a location that, when the flow of water through the chlorinator is interrupted and the retention system retains the water inside the chamber, this allows the measurement of the pH of the water that is retained inside the chamber.

In this way, during the normal operation of the swimming pool, with the presence of water flow inside the chamber due to chlorination being in progress, said sensor will take the measurements corresponding to the pH value of the water in the facility, which, logically, is the water present in the swimming pool basin and intended for bathing and which can be tens of cubic meters.

However, when the chamber is closed by the action of the water retention system of the invention, said pH sensor or meter will take measurements corresponding to the pH value of the water contained and retained inside the chamber, being possible, in this way, the monitoring of the pH level during the cleaning operation of the electrodes, which in this case barely reaches a few liters (typically 1 or 2 liters).

This pH measurement will allow for a contribution or injection of pH minus acid in sufficient quantity and time to ensure complete cleaning of the electrodes. In other words, by controlling the pH level inside the closed chamber of the chlorinator, it will be possible to check how much and how said pH varies and estimate to what extent the injected pH minus acid has been consumed when neutralized by scale. which will also allow to calculate its total dissolution. Thus, being able to carry out continuous monitoring of the pH level will avoid having to inject a fixed amount of pH minus acid as was done until now in the state of the art, which could either be excessive or insufficient depending on the hardness of the water, temperature, electrode size or time since the last cleaning. On the contrary, the chlorinator of the present invention will be able to provide a first initial dose and, after a period of time, check if there are still scales and, if so, provide a new amount of pH minus acid that may well be the same to the initial or lesser one, carrying out as many iterations as necessary in order to provide an amount of pH minus acid proportional and adjusted to the amount of lime deposits existing on the electrodes.

In this way, when there is no longer any scale, it will be observed that the pH of the chamber remains low and at a constant level. This allows us to know that there is no longer any consumption of acid and therefore that there are no more scales left. That is, the reaction occurs:

CO₃Ca + *2HCl* → H₂CO₃ + Cl₂Ca

Or what is the same: Calcium carbonate + hydrochloric acid = carbonic acid + soluble calcium chloride.

On the other hand, in order to achieve efficient cleaning of the electrodes by means of the pH minus acid, the salt chlorinator of the invention comprises at least one stirring device for the water inside when the chamber is closed thanks to the retention system. This makes it easier for the cleaning mixture to be distributed homogeneously, reaching all points of the electrodes and accelerating the cleaning process considerably compared to not stirring (up to 3 or 4 times).

Furthermore, the chlorinator of the invention is connected to processing and control means responsible, through the corresponding software or control code, for commanding the pH sensor or meter of the water reading and, with the pH results obtained in the measurement and a series of predefined variables, feed an internal control algorithm to obtain as a result a control signal to command an injection pump pH minus acid and that it supplies the necessary amount to the injection point depending on whether said contribution is made to correct the increase in pH in the water of the swimming pool basin or to clean the lime deposits on the electrodes. In the latter case, furthermore, said control means will be responsible for stopping the flow of water in such a way that it can be retained inside the chlorinator chamber by the action of the restraint system. Likewise, said control means will activate the stirring device, allowing the latter to vary its speed and alternate the start/stop phase as best suited for the electrode cleaning operation.

On the other hand, the invention also extends a cleaning method for a salt chlorinator so that it is possible to efficiently eliminate scale (Ca/Mg carbonates-hydroxides) on the electrodes. As stated above, in the current state of the art, it is known to use a cleaning agent such as a pH minus acid to remove said deposits. However, the already known methods consist of supplying a fixed amount of pH minus to the chamber, stirring or shaking the mixture for its dispersion and, subsequently, leave it at rest to facilitate its action. This cycle can be repeated several times until it is considered that the deposits have been eliminated or reduced sufficiently, which can occur either by direct observation or because a time estimate is made based on previous experiences. That is, a systematic method adjusted to the particularities of each case is not established, for example, the hardness of the water, the ambient temperature, the type and size of the electrodes, etc.

However, the method of the present invention solves these drawbacks and allows a complete cleaning of the electrodes while adjusting the time and amount of pH minus acid for each cleaning without the need for user intervention or without the need to have prior knowledge of the installation, which results in more efficient, simple and autonomous cleaning, which means that it can be used for an endless number of installations regardless of their geographical area.

Specifically, the method of the invention is based, mainly, on the continuous measurement of the pH of the water contained inside the chlorinator chamber during the cleaning phase or mode of the electrodes.

As stated previously, by controlling the pH level inside the closed chamber of the chlorinator, it will be possible to estimate to what extent the pH minus acid that has been injected inside to dissolve the deposits has been consumed, which will also allow estimating whether there is still scale deposited on the electrodes and, therefore, an addition of a new amount of pH minus acid is necessary.

Likewise, the method of the invention, in addition to facilitating automatic cleaning of the electrodes, will allow the amount of pH minus acid that is added to the chlorinator chamber to be adjusted, that is, the injected amount of this can be adjusted depending on the estimated amount of lime deposits that still remain to be removed. In this way, for example, a first initial dose can be provided and, after a period of time, check if there are still deposits and, if so, add a new amount of pH minus acid that may be equal to the initial one or less, performing as many iterations as necessary in order to provide an amount of pH minus acid proportional and adjusted to the amount of lime deposits existing on the electrodes.

To this end, the cleaning method of a salt chlorinator of the invention includes the following steps:
- Fill the chamber of the salt chlorinator with water;
- Close the chamber of the salt chlorinator so that the water is retained inside and place at least one pH meter inside;
- Add a quantity of pH minus acid inside the chamber and stir the mixture continuously for the duration of the cleaning operation so that it is distributed homogeneously;
- Continuously measure the pH value V of the mixture housed inside the chamber in such a way that:
   ∘ If it is verified that the pH value V of the mixture is equal to or greater than a preset reference value Vref, a new amount of acid is added, as it means that there are still traces of carbonate to be dissolved;
   ∘ If it is verified that the pH value V of the mixture is lower than the preset reference value Vref, then the evolution over time of the pH value V of the mixture is checked so that:
      ▪ If between two consecutive moments of time t1 and t2 the value V of the pH of the mixture is constant, the cleaning is finished, stopping the agitation of the mixture and opening the chamber of the chlorinator again; or
      ▪ If between two consecutive moments of time t1 and t2 the value V of the pH of the mixture increases, a new amount of acid is added, as it means that there are still traces of carbonate to be dissolved.

As can be seen, this method guarantees the dissolution of lime deposits completely automatically and independently of external conditions, not requiring human intervention.

On the other hand, as already said, the method of the invention also allows the successive contributions of pH minus acid to be made proportional to the amount of lime deposits remaining in the chlorinator chamber, since, in the event that the system determines that a new contribution of pH minus acid is necessary, the amount will be different in the case that it is added because the value V of the pH of the mixture is above the preset Vref than in the case that, even if it is below, there is still an increase between the two measured time values t1 and t2, since this means that the pH minus acid continues to be consumed, although in this case already at a lower rate and, therefore, it will not be necessary to add the same amount as if the pH value V of the mixture is above the preset Vref.

It is also important to note that the preset value Vref must be such that it ensures that the carbonate dissolves at an acceptable rate. That is, if the value Vref is set to a very high value, for example a value greater than pH 4, this would mean that the mixture is very little acidified and, therefore, that although the carbonate deposits could reach disappear, they would take a long time to do so, on the order of 8 hours or more, which, in addition to consuming energy, would have the consequence of interrupting the normal operation of the swimming pool.

### Brief description of the figures

To complement the description that is being made and in order to help a better understanding of the characteristics of the invention, this descriptive report is accompanied, as an integral part thereof, by a set of drawings, in which for Illustrative and non-limiting purposes, the following has been represented:
Figure 1.- Shows a schematic figure of an installation for the treatment of swimming water from the swimming pool based on salt chlorination according to the current State of the Art.
Figure 2.- Shows a schematic figure of the chlorinator of the present invention connected to an installation for the treatment of swimming water from the swimming pool.
Figure 3.- Shows a perspective sectional view of the chlorinator of the invention where the main elements can be seen.
Figure 4.- Shows a sectional elevation view of the chlorinator of the invention in Figure 3.
Figure 5a.- Shows a perspective view of an example of the stirring device used to homogenize and uniformly distribute the cleaning solution inside the chlorinator.
Figure 5b.- Shows a schematic view of the water path inside the chlorinator chamber when the stirring device is put into operation.
Figure 6.- Shows a graph in which a straight line is shown schematically that represents the value V of the pH of the water inside the chlorinator chamber for a certain time and for an example of application of the method of the invention.

### Preferred embodiment of the invention

In view of the aforementioned figures and in accordance with the numbering adopted, an example of a preferred embodiment of the invention can be observed, which includes the parts and elements indicated and described in detail below.

Specifically, Figure 1 shows a figure of an installation for the treatment of swimming water from the swimming pool based on salt chlorination according to the current State of the Art.

It shows the position that in said installation, which as mentioned is usually confined in a suitable compartment, is occupied by the chlorinator, whose interior chamber (1) houses the electrodes (2) (not shown) responsible for carrying out the electrolysis. Likewise, the filter (3), the multi-way selector valve (4) associated with said filter (3), the electronics or control means (5), the electrical power panel (6), the pH minus acid tank (7), the dosing pump (8) of said acid and the filtration pump (9) responsible for maintaining the flow of water in the circuit, which, as also mentioned, comes from the swimming pool basin after leaving through skimmers can be seen. Furthermore, this figure shows how, by the action of the filtration pump (9), the water coming from the swimming pool enters the disinfection and cleaning circuit, flowing through a first suction pipe (10), where it passes through the multi-way selector valve (4) that gives it entry to the filter (3), from where it leaves, passing again through said multi-way selector valve (4) towards a second pipe (11) that takes it to the chamber (1) from the chlorinator, where it is treated and again taken through an outlet duct back to the swimming pool basin, closing the cleaning and disinfection cycle.

On the other hand, said figure specifically shows how said control means (5) are connected to both the chlorinator and the pH minus acid tank (7) and to the dosing pump (8) of said acid, which is injected into the chamber (1) of the chlorinator through an injection point (12) located in the second pipe (11). Likewise, it is observed how at that same point the installation includes a pH meter (13) and, additionally, an ORP sensor (14) to measure the redox potential, that is, the capacity of the water present in the installation to oxidize contaminants.

However, as already explained in the previous section, this type of state-of-the-art installation in Figure 1 solves the presence of lime deposits on the electrodes by polarity reversal, which gives rise to the aforementioned problems or without polarity reversal but incorporating a second pH minus acid injection device (not shown) inside the chamber (1) of the chlorinator, which means providing means for closing it so that the cleaning solution acts for a time in the chamber (1), but also with the drawbacks before mentioned derived from not carrying out a continuous and controlled pH measurement.

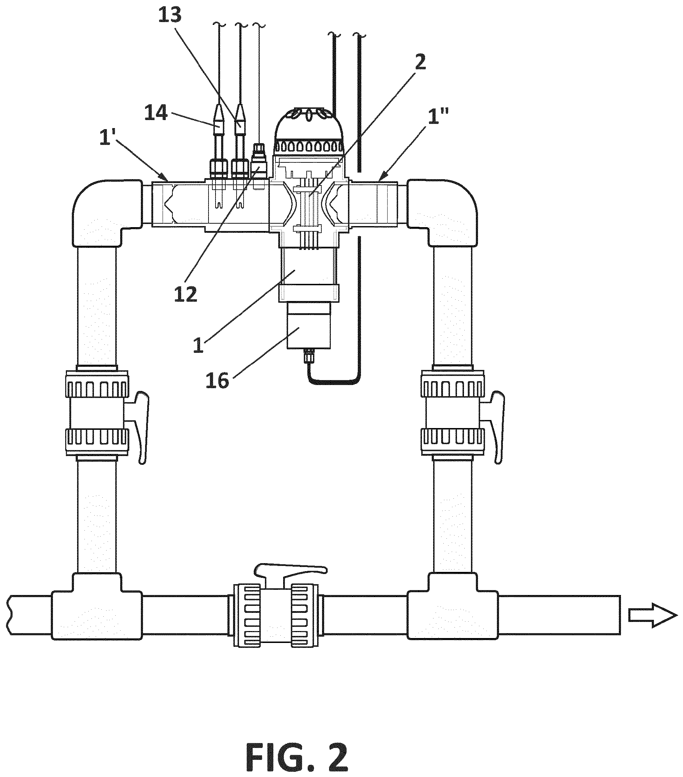

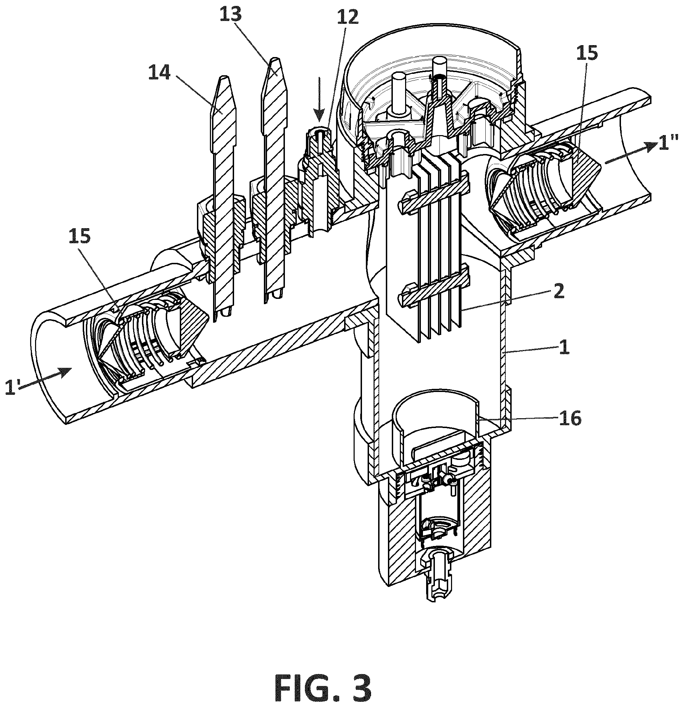

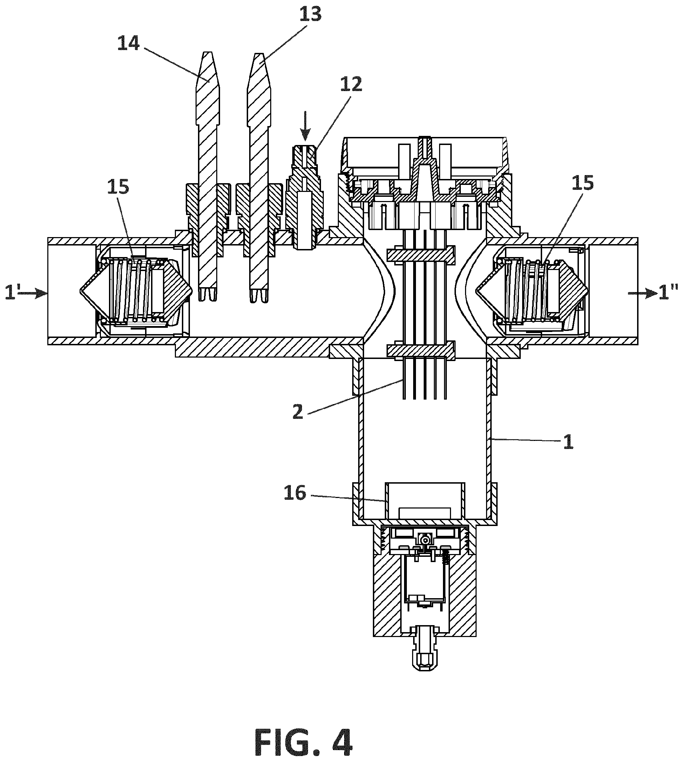

However, in order to obtain the advantages described in the previous section, and as can be seen in the example embodiment of Figures 2 to 5, the salt chlorinator of the invention comprises:
- A chamber (1) that defines an interior space for the treatment of water from the swimming pool by salt chlorination;
- A set of electrodes (2) located inside the chamber (1) that, when connected to a direct current (DC) source, are susceptible to electrolyze chloride salts dissolved in water;
- A water inlet to the chamber (1');
- A water outlet from the chamber (1");
- A water retention system (15)inside the chamber (1);
- At least one stirring device (16) to remove water from inside the chamber (1);
- At least one injection point (12) to inject a pH minus acid into the chamber (1); and
- At least one pH meter (13) to measure the pH of the water;

Where, according to an example of a preferred embodiment, the pH meter (13) of the water is located within the space defined by the chamber (1) of the chlorinator and the water retention system (15) inside.

That is, the pH meter (13) is located inside the chamber (1) of the chlorinator when the retention system (15) operates or, in other words, it is located in such a place that, when the flow of water through the chlorinator and the retention system (15) retains the water inside the chamber (1), allowing the measurement of the pH of the water that is retained inside the chamber (1).

On the other hand, according to a possible embodiment, shown in Figures 2 to 4, the water retention system (15) inside the chamber (1) will be formed by separate non-return or retention valves, which are susceptible to allow the flow during the normal operation of the chlorinator (during the usual filtration, disinfection and electrolysis operations), that is, give way to the thrust of the flow, but close when said flow is interrupted, preventing the exit of water from the chamber (1) so that the cleaning of the electrodes (2) can be carried out (cleaning mode).

Specifically, these two valves are located, respectively, at the water inlet to the chamber (1') and at the water outlet of the chamber (1") which, as can be seen in the example of embodiment shown in the figures where the chlorinator has a cylindrical shape, they can be constituted by separate conduction sections or pipes transverse to said chamber (1) aligned with each other. However, according to another possible embodiment, not shown, said inlet and outlet could also be formed by pipes located at different heights of the chlorinator without the need to be aligned, or located on the same face of the chlorinator, and/or even located, one or both, longitudinally or obliquely with respect to the chlorinator.

Thus, for the example shown in Figures 2 to 4, the interior space defined by the chamber (1) of the chlorinator does not have to be limited to the space delimited by the geometric shape of the chlorinator, in this case a cylinder, but rather extends to the interior space defined by the water inlet and outlet of the chamber (1', 1"), in this case transverse pipes, to the point that they delimit the non-return valves of the water retention system (15).

Therefore, the pH meter (13) will not necessarily have to be located within the geometric space defined by the body of the chlorinator, but may be located in the interior space (1) defined by the chamber when it is closed by the action of the retention system (15), which, as has been said, also extends to that defined by the inlet and outlet of water from the chamber (1', 1").

This is, furthermore, advisable, since it has been experimentally proven that the measurement of pH meter (13) can be affected by the electric field created by the electrodes, giving values that could vary depending on whether they are in operation (performing electrolysis) or at rest (without performing electrolysis). Therefore, according to the embodiment shown in the figures, this is placed, together with any other type of sensor, e.g. the ORP, at the furthest possible point from the electrodes, that is, inside the water inlet and/or outlet of the chamber (1', 1") to the limit with the water retention system (15).

Thus, to ensure that the measurement of the pH value in the isolated chamber is correct and is not affected by said field, a solution consists of keeping the pH meter (13) away from the electrodes, or using a screen that says to the probe, to the bulb, in the "shadow" area of the field.

In the case of the first solution, to achieve said distance, it is proposed that the non-return valve of either the inlet ('1) or the outlet (1") be located further away from the chamber (1) of the chlorinator than the other, so that the pH meter (13) can be placed in it so that it is located at a further point. In this sense, in Figures 2 to 4 an example embodiment can be seen in which, to ensure a sufficient distance between the pH meter (13) and the electrodes, it is located inside the inlet (1'), but making that the retention system is further away than in the case of the one located at the exit (1").

On the other hand, the non-return valve that we use to isolate chamber 1 is a preferred but not limiting option and other non-return valve design options can also be used (spring, oscillating flapper, piston, ball check, etc.)

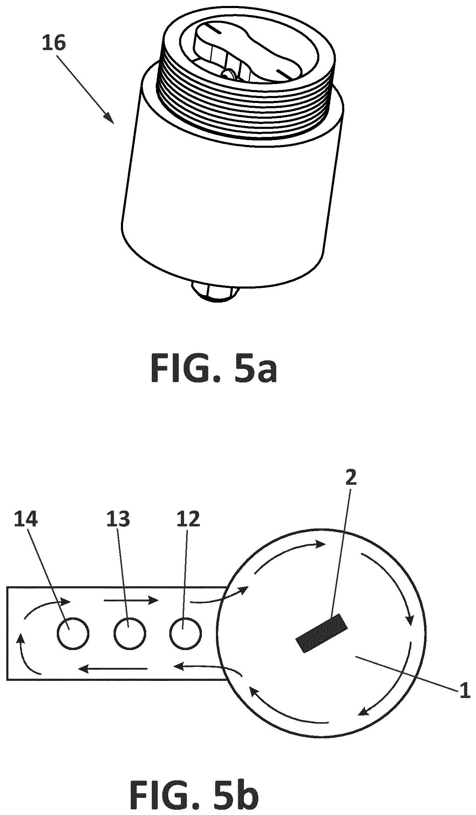

On the other hand, Figure 5a shows a possible embodiment of the invention of the stirring device (16), which in this case is a magnetic stirrer, for example, a propeller-shaped stirrer or magnetic drive bar, but it is not ruled out that it could be of any other type.

However, as already said, this device facilitates the cleaning mixture (pH minus acid) to be distributed homogeneously, reaching all points of the electrodes (2) and accelerating the dissolution of lime by quickly renewing the lime on its surface. acidic pH, so said device must guarantee water circulation inside the chamber such that it not only distributes it over the surface of the electrodes, but rather it runs through the space in which the injection point (12) of the pH minus acid is located so that it pushes and distributes it homogeneously throughout the chamber (1) of the chlorinator as shown in Figure 5b.

Finally, the chlorinator of the invention additionally comprises processing and control means (5) that govern its operation and that are responsible, through the corresponding software or control code, for activating the pH meter (13) and, with the pH results obtained in the measurement and a series of predefined variables, feed an internal control algorithm to obtain as a result a control signal to command to the dosing pump (8) of pH minus acid and inject it through the point of injection (12) into the interior of the chamber (1) in an optimal time and manner both to correct the increase in pH in the water of the swimming pool basin during its normal operation and to clean the lime deposits of the electrodes (2).

These processing and control means (5) may in turn comprise the necessary wireless communications modules so that the user can program, control and/or monitor the process remotely, without having to be physically in the cabin where the chlorinator is located.

On the other hand, the present invention also proposes a cleaning method for a salt chlorinator without polarity reversal, which includes the following steps:
- Fill the chamber (1) of the salt chlorinator with water;
- Close the chamber (1) of the salt chlorinator so that the water is retained inside and place at least one pH meter (13) inside;
- Add a quantity of pH minus acid inside the chamber (1) and stir the mixture continuously for the duration of the cleaning operation so that it is distributed homogeneously;
- Continuously measure a value V of the pH of the mixture housed inside the chamber (1) in such a way that:
   ∘ If it is verified that the pH value V of the mixture is equal to or greater than a preset reference value Vref, a new amount of acid is added, as it means that there are still traces of carbonate to be dissolved;
   ∘ If it is verified that the pH value V of the mixture is lower than the preset reference value Vref, then the evolution over time of the pH value V of the mixture is checked so that:
      ▪ If between two consecutive moments of time t1 and t2 the value V of the pH of the mixture is constant, the cleaning is finished, stopping the agitation of the mixture and opening the chamber (1) of the chlorinator again; or
      ▪ If between two consecutive moments of time t1 and t2 the value V of the pH of the mixture increases, a new amount of acid is added, as it means that there are still traces of carbonate to be dissolved.

On the other hand, as already said, the method of the invention also allows the successive additions of pH minus acid to be made proportional to the amount of lime deposits remaining in the chlorinator chamber.

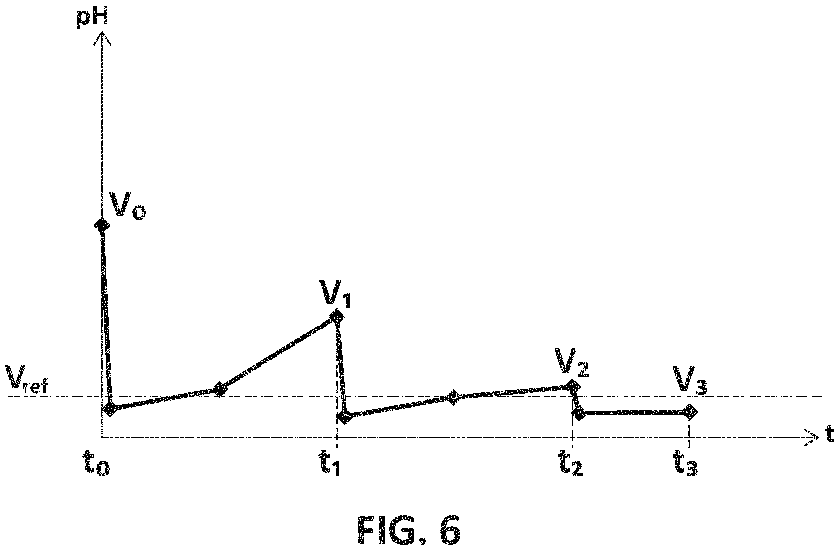

This can be clearly seen in the example of implementation shown in Figure 6, where it can be seen how both at times t0 and t1 the value V of the pH of the mixture is well above the preset reference value Vref, so it would be necessary add a certain amount of pH minus acid, for example 30 ml of 20% HCl, but at time t2 the pH value V is only slightly above the preset reference value Vref, so a smaller amount could be added, for example, 10 ml of 20% HCl, enough to finish dissolving the carbonate.

This graph also shows how an increase in the value V of the pH of the mixture between two times, for example, t1 and t2, which represents a new contribution of pH minus acid, is translated in said graph in which the line that represents the value V of the pH of the mixture inside the chamber (1) of the chlorinator presents a positive slope, that is, there is an increase in said value V due to the pH minus acid present in the mixture being consumed by dissolving the lime deposits.

Continuing with the example of the preferred embodiment of the invention, the need to set the reference value Vref in such a way as to ensure the dissolution of the carbonate deposited on the electrodes of the chlorinator in a reasonable time for consumption purposes and that does not interfere with the normal operation of the swimming pool. In this regard, numerous tests have been carried out and it has been determined that the optimal values at which to set the pH reference value Vref to carry out the method of the invention are between 1.5 - 3.

Thus, following the method of the present invention, it is also possible to adapt the chlorinator cleaning cycles to the needs or convenience of each user.

For example, it is possible to establish a cleaning routine consisting of the daily application of the cleaning cycle described in the method of the invention, that is, apply the chlorinator cleaning method after it has been servicing a pool for a whole day or, in other words, if it has been working for 7 hours, since the electrolysis process does not occur during the entire time that the swimming pool is in service. In this case, logically, the cleaning cycle will have a very short duration which, according to the tests carried out, will be 0.5 hours and having supplied an approximate total amount of 4 to 5 ml of 20% HCL.

On the contrary, according to another possible form of application of the method of the invention, the user might want to apply the method of the invention and thus the chlorinator cleaning cycle only once a week, which would mean that the chlorinator would have been running 49 hours (7days x 7hr/day). In this case, also logically, as more lime deposits have accumulated on the chlorinator electrodes than in the previous example, the cleaning cycle would be longer, specifically, according to the carried out tests, lasting 1.5 hours having supplied a total amount of approximately 20 to 30 ml of 20% HCL.

That is, if applying the cleaning cycle once a week consumes 20 to 30 ml of 20% HCL, when doing it daily this means 7 days x 4 to 5 ml/day per week, which would give a total of 28 to 35 ml of 20% HCL. Amounts of pH minus acid spent which, as can be seen, are very similar in both cases.

## Claims

1. Salt chlorinator comprising:
- A chamber (1) that defines an interior space for the treatment of water from the swimming pool by salt chlorination;
- A set of electrodes (2) located inside the chamber (1);
- A water inlet to the chamber (1');
- A chamber water outlet (1");
- A water retention system (15)inside the chamber (1);
- At least one stirring device (16) to remove water from inside the chamber (1);
- At least one injection point (12) to inject a pH minus acid into the chamber (1); and
- At least one pH meter (13) to measure the pH of the water;
**characterized in that,** the pH meter (13) of the water is located within the space defined by the chamber (1) of the chlorinator and the water retention system (15) inside.

2. Salt chlorinator according to claim 1, **characterized in that** the water inlet to the chamber (1') and the water outlet of the chamber (1") are formed by separate conduction sections.

3. Salt chlorinator according to claim 1 or 2, **characterized in that** the water retention system (15) inside the chamber (1) is formed by separate non-return valves, capable of opening in the presence of flow and close when said flow is interrupted, preventing the water from leaving the chamber (1).

4. Salt chlorinator according to claim 3, **characterized in that** the two non-return valves are located, respectively, at the water inlet to the chamber (1') and at the water outlet of the chamber (1").

5. Salt chlorinator according to claim 3 or 4, **characterized in that** one of the non-return valves is located further than the other from the chamber (1) of the chlorinator and that the pH meter (13) is located next to the farthest non-return valve.

6. Salt chlorinator according to any of the preceding claims, **characterized in that** the stirring device (16) is a magnetic stirrer.

7. Salt chlorinator according to any of the previous claims, **characterized in that** it comprises processing and control means (5) that govern its operation.

8. Salt chlorinator according to claim 7, **characterized in that** the processing and control means (5) comprise a wireless communications module so that the user can program, control and/or monitor the process remotely, without having to be physically in the room where the chlorinator is located.

9. Cleaning method of a salt chlorinator without polarity reversal, **characterized in that** it includes the following steps:
- Fill the chamber (1) of the salt chlorinator with water;
- Close the chamber (1) of the salt chlorinator so that the water is retained inside and place at least one pH meter (13) inside;
- Add a quantity of pH minus acid inside the chamber (1) and stir the mixture continuously for the duration of the cleaning operation so that it is distributed homogeneously;
- Continuously measure a value V of the pH of the mixture housed inside the chamber (1) in such a way that:
∘ If the pH value V of the mixture is equal to or greater than a preset reference value Vref, a new amount of acid is added;
∘ If the pH value V of the mixture is lower than the preset reference value Vref, then the evolution over time of the pH value V of the mixture is checked so that:
▪ If between two consecutive moments of time t1 and t2 the value V of the pH of the mixture is constant, the cleaning is finished, stopping the agitation of the mixture and opening the chamber (1) of the chlorinator again; or
▪ If between two consecutive moments of time t1 and t2 the value V of the pH of the mixture increases, a new amount of acid is added.

10. Cleaning method of a salt chlorinator without polarity reversal according to claim 9, **characterized in that** the amount of pH minus added to the mixture is susceptible to varying proportionally to the difference between the value V of the pH measured in the mixture and the preset reference value Vref.

11. Cleaning method of a salt chlorinator without polarity reversal according to claim 9 or 10, **characterized in that** the pH reference value Vref is between 1.5 and 3.
